# EUROPÄISCHE PATENTSCHRIFT

(11) **EP 3 911 616 B1**
(45) Veröffentlichungstag und Bekanntmachung des Hinweises auf die Patenterteilung: **15.02.2023**
(21) Anmeldenummer: 20700499.5
(22) Anmeldetag: 15.01.2020
(51) Int. Cl.: C04B 28/04, C04B 28/06, C04B 40/00

(54) **SCHNELL HÄRTENDE MINERALISCHE BINDEMITTELMISCHUNG**
FAST CURING MINERAL BINDER COMPOUND
MÉLANGE DE LIANT MINÉRAL À DURCISSEMENT RAPIDE

(30) Priorität: 18.01.2019 EP 19152545
(43) Veröffentlichungstag der Anmeldung: 24.11.2021
(73) Patentinhaber: Venator Germany GmbH, 47198 Duisburg (DE)
(72) Erfinder: HETCHE, Olaf, 48432 Rheine (DE)
(74) Vertreter: Thot, Norman Benjamin
(86) Internationale Anmeldenummer: PCT/EP2020/050860
(87) Internationale Veröffentlichungsnummer: WO 2020/148309

(56) Entgegenhaltungen:
- EP-A1- 0 579 063
- EP-A1- 0 858 981
- EP-A1- 2 774 902
- EP-A1- 3 260 258
- JP-A- 2002 249 351
- JP-A- 2002 249 352

## Beschreibung

Die vorliegende Erfindung betrifft eine schnell härtende mineralische Bindemittelmischung und deren Verwendung.

In Bau- und Bauhilfsstoffen werden als Bindemittel hauptsächlich Portlandzemente, Calciumsulfate mit unterschiedlichen Kristallwassergehalten, Kalk, Tonerdezemente oder deren Gemische verwendet. Während portlandzementgebundene Baustoffe sich besonders in witterungsbelasteten Bereichen eignen, in denen eine hohe Frost/Tau-Wechselbeständigkeit sowie hohe Beständigkeit gegenüber atmosphärischen Einflüssen erforderlich ist, werden Calciumsulfat und Tonerdezement enthaltende Bauprodukte, bedingt durch deren mangelnde Witterungsbeständigkeit, hauptsächlich im Innenbereich von Gebäuden eingesetzt. Solche Produkte, deren Bindemittel auf Mischungen aus Tonerdezement, Calciumsulfaten, Kalk und/oder Portlandzement beruhen, zeichnen sich aber durch einen besonders hohen Frühfestigkeitsaufbau sowie in geeigneten Formulierungen durch ein hohes Wasserbindungsvermögen und somit einen hohen Selbsttrocknungseffekt aus.

Die Bauindustrie und insbesondere die bauchemische Industrie verwenden schnell erhärtende Produkte, denen eine schnell härtende mineralische Bindemittelmischung zu Grunde liegt. Für die schnell härtende mineralische Bindemittelmischung werden verschiedene Zusammensetzungen herangezogen. Dabei wird mindestens ein Zement auf Basis von Tonerdezement, auch Calcium-Aluminat-Zement mit variablem CaO:Al₂O₃ Verhältnis genannt, und/oder Calciumsulfoaluminat ggfs. auch im Gemisch mit Calciumsulfat-Hydrat Modifikationen wie CaSO₄, CaSO₄ x 0,5 H₂O und/oder CaSO₄ x 2 H₂O und/oder weiteren hydraulisch erhärtenden Bindemitteln auf Zementbasis gemäß EN 197-1 verwendet. Diese mineralische Bindemittelmischungen können weiterhin CaO oder Ca(OH)₂ enthalten.

Diese Bindemittelmischungen können vorteilhaft zur Herstellung einer Baustoffmischung, enthaltend weiterhin -dem Fachmann bekannte- Füllstoffe und Leichtfüllstoffe, Abbindeverzögerer, Abbindebeschleuniger, dispergierbare Kunststoffpulver, Entschäumer, und/ oder Luftporenmittel, Verflüssiger, Stabilisatoren, Wasserretentionsmittel sowie die Rheologie der Baustoffmischung beeinflussende Additive sowie ggf. weitere Additive, wie sie dem Fachmann bekannt sind, verwendet werden.

In mineralischen hydraulischen Bindemittelmischungen können Abbindebeschleuniger- und/oder -verzögerer durch Zumischen im trockenen wie auch gelöstem Zustand als Einzelkomponenten sowie als Mischungen der Einzelkomponenten eingesetzt werden. Als Erstarrungs- und Abbindebeschleuniger werden Einzelkomponenten oder Mischungen von Einzelkomponenten dem Fachmann gut bekannte Alkali und/oder Erdalkalisalze eingesetzt. Diese Gruppe beinhaltet auch organische Salzverbindungen wie Carbonsäure-, Hydoxycarbonsäuresalze, Cyanate, usw.

Insbesondere für schnell erhärtende Bindemittelmischungen enthaltend Calciumaluminat in wechselndem CaO:Al₂O₃ Verhältnis, sowie Calciumsulfoaluminat und/oder Mischungen derselben enthaltende Bindemittelmischungen werden Beschleunigeradditive enthaltend Lithiumsalze wie Lithiumcarbonat, Lithiumhydroxid, Lithiumsulfat usw. sowie Mischungen derselben, ggf. gemeinsam mit weiteren Beschleunigern oder Verzögerern, zugesetzt, um die gewünschten Eigenschaften der Bindemittelmischung, wie Verarbeitungszeit, Erhärtungsdauer, Erstarrungszeiten, Festigkeitsentwicklung und schnelle Trocknung z.B. durch mineralogische Wasserbindung zu gewährleisten.

JP 2002 249352 A offenbart die Verwendung von alkalifreien Beschleunigern auf Zirkonium(IV) oder Titanium(IV) Basis, nämlich z.B. Zirkoniumsulfat-Tetrahydrat, Zirkonium-Tetrachlorid, Zirkonium-Dichlorid-Oktahydrat und Zirkonium-Trichlorid in Kombination mit Kalziumaluminat und ggf. einer Ca- oder Al-haltigen Komponente als Zusatzmittel für Portland- oder Tonerdezement. In der Mischung werden bevorzugt 5-10 T Zusatzmittel zu 100 T Zement zugegeben. Die Zementmischung eignet sich für Betone zum Einsatz im Tunnelbau.

WO 97/45379 A1 offenbart im Beispiel C eine Bindemittelmischung aus 50-100 T CAC, 20-70 T Gips oder Anhydrit, 5-40 T Kalk oder Kalkhydrat, 0-4 T Beschleuniger und 0-4 T Entschleuniger. Der Beschleuniger wird hergestellt aus einer Mischung von 50-200 T Natriumchlorid oder Alkali, 50 - 200 T Lithiumhydrat oder Lithiumchlorid, 5 400 T Bentonit. Die Bindemittelmischung wird mit Sand und Kies zu Shotcrete vermengt, der beim Tunnelbau Verwendung findet.

WO 2018/003832 A1 offenbart im Beispiel 5 eine Bindemittelmischung aus 100 T CAC (Blaine 5000 cm²/g), 3 T CaSO₄, 4 T LC Beschleuniger (Lithiumkarbonat) und 4 T Beschleuniger CL (Kalziumlaktat), die mit 200 T Natursand zu einem Baustoff vermischt wird, der durch 3D-Druck verarbeitet wird.

US 5 980 628 A offenbart in den Beispielen 7-16 2-Komponentenmischungen, die eine erste entschleunigte gipshaltige Komponente und eine zweite beschleunigende Härterkomponente enthalten, wobei die zweite Komponente entweder FeCl₃^{∗}6H₂O oder AlCl₃^{∗}6H₂O als Komplexbildner enthält. Die Fe- und Al-haltigen Komplexbildner sind bevorzugt, weil sie unbegrenzt verfügbar und nicht gesundheitsgefährdend sind. Als alternative Komplexbildner werden u.a. aber auch Salze von Ti(IV) gelistet. In US 5 980 628 A wird nicht erwähnt, dass der Mischung ein Zement zugegeben werden kann.

Durch die Verwendung von Lithiumsalzen für die Herstellung von Batterien für mobile Elektronik und Fahrzeuge nimmt der Bedarf an Lithiumsalzen für Nicht-Bauanwendungen stetig zu, sodass Preise und Verfügbarkeiten für die Herstellung von Baustoffen zunehmend kritisch werden.

Aufgabe der vorliegenden Erfindung war es daher, eine Alternative zu den bisher verwendeten Lithiumverbindungen als Beschleunigerzumischung und die Verwendung derselben für schnell erhärtende Bindemittelmischungen bereitzustellen.

Diese Aufgabe wurde gelöst durch eine schnell härtende mineralische Bindemittelmischung enthaltend einen Beschleuniger auf Titan(IV) Basis, Zement enthaltend eine oder mehrere Komponenten ausgewählt aus den Verbindungen 3 CaO *

Al₂O₃, 12CaO * 7Al₂O₃, CaO * Al₂O₃, CaO * 2Al₂O₃, CaO * 6Al₂O₃ und/oder 4CaO * 3Al₂O₃ * SO₃, einen Sulfatträger in einem Anteil von 5 bis 80 Gew.-%, bevorzugt 15 bis 70 Gew.-%, besonders bevorzugt 25 bis 50 Gew.-%, optional ein oder mehrere alkalische Komponente, und optional ein oder mehrere Additive. Bevorzugt verwendet das schnell härtende mineralische Bindemittelmischung Titanylsulfat (TiO(SO₄)), Titan(IV)-Sulfat, Titan(IV)Phosphat und/oder Titan(IV)-Oxychlorid (TiOCl₂), auch als deren Hydrate und/oder Schwefelsäure Addukte, als Beschleuniger auf Titan(IV) Basis. TiOCl₂ wird z.B. als TiOCl₂ HCl-Lösung verwendet.

Überraschenderweise zeigt die Zugabe eines Beschleunigers auf Titan(IV) Basis wie z.B. Titanylsulfat in geringen Dosierungen einen mit, dem Fachmann bekannten Mengen, Lithiumsalzen vergleichbaren beschleunigenden Effekt. Dies ist insbesondere überraschend, da in der Literatur Titanylsulfat bisher genau der gegenteilige technische Effekt zugesprochen wurde. Die WO 2017/155517 offenbart zum Beispiel die Verwendung von Titanylsulfat als Verzörgerer ("set retarder"). Nirgendwo wurde der einfache Austausch/Ersatz von Lithiumsalzen durch Titanylsulfat beschrieben.

Bevorzugt verwendet das schnell härtende mineralische Bindemittelmischung Titanylsulfat (TiO(SO₄)) in einem Anteil von 0,01 bis 6 Gew.-%, bevorzugt 0,1 bis 3 Gew.-%, besonders bevorzugt 0,2 bis 0,8 Gew.-%, und/oder Titan(IV)-Oxychlorid (TiOCl₂) in einem Anteil von 0,01 bis 6 Gew.-%, bevorzugt 0,1 bis 3 Gew.-%, besonders bevorzugt 0,2 bis 0,8 Gew.-%, jeweils bezogen auf das Gewicht der schnell härtenden mineralischen Bindemittelmischung.

Bevorzugt wird der Titan(IV)-Beschleuniger als Feststoff, als wässrig-basierte Suspension, als Lösung, und/oder auf einem Träger absorbiert und/oder adsorbiert, der schnell härtenden mineralischen Bindemittelmischung zugemischt. Bevorzugt werden die Träger z.B. aus Siliciumdioxid (SiO₂), Aluminiumoxid (Al₂O₃) und/oder Titandioxid (TiO₂) ausgewählt. Bevorzugt werden weitere Feststoffe oder Beschleuniger oder Verzögerer zugegeben. Eine besonders schnell härtende mineralische Bindemittelmischung wird erzielt, wenn der erfindungsgemäßer Beschleuniger auf Titan(IV) Basis in die erfindungsmäßige schnell härtende mineralische Bindemittelmischung als wässrige Lösung oder als Dispersion verwendet wird. Dies kann im Öl- und Gas-Bereich von Vorteil sein, z.B. um Bohrlöcher in situ schnell zu stopfen, oder im Straßenbau, besonders im Tunnelbau, wo eine schnell härtende mineralische Bindemittelmischung an/auf die Wände eines Tunnels gespritzt bzw. aufgetragen wird.

Das Zement in der schnell härtenden mineralischen Bindemittelmischung ist bevorzugt ein Tonerdezement und/oder ein Portlandzement. Ein Fachmann wird dabei auch verstehen, dass Portlandzement auch den Sulfatträger enthalten kann.

Bevorzugt ist das Molarverhältnis Beschleuniger auf Titan(IV) Basis zu der Verbindung CaO in den Verbindungen (d.H., mmol Beschleuniger auf Titan(IV) Basis : mol Verbindung CaO in den Verbindungen) der schnell härtende mineralische Bindemittelmischung von 0,1 bis 300, bevorzugt 2 bis 100, besonders bevorzugt 3 bis 50.

Als Sulfatträger in der schnell härtenden mineralischen Bindemittelmischung werden bevorzugt Calciumsulfat, Magnesiumsulfat, Natriumsulfat, Kaliumsulfat, Eisensulfat, Mangansulfat, Kobaltsulfat, Nickelsulfat und/oder Kaliumperoxomonosulfat, verwendet. Besonders bevorzugt werden Calciumsulfat und/oder Magnesiumsulfat als Sulfatträger in der schnell härtenden mineralischen Bindemittelmischung verwendet. Ganz besonders bevorzugt wird Calciumsulfat als Sulfatträger verwendet. Als Sulfatträger ist dabei jede Verbindung zu verstehen, die in wässrigem Medium SO₄²⁻ Ionen zur Verfügung stellt. Sulfatträger ist z.B. ein Salz der Schwefelsäure.

Als alkalischer Aktivator in der schnell härtenden mineralischen Bindemittelmischung werden bevorzugt Portlandzement, Alkalioxide, Erdalkalioxide, Alkalihydroxide, und/oder Erdalkalihydroxide und deren Gemische verwendet.

Als Additiv in der schnell härtenden mineralischen Bindemittelmischung werden Abbindeverzögerer, Abbindebeschleuniger, dispergierbare Kunststoffpulver, Entschäumer, Hydrophobierungsmittel, Luftporenmittel, Verflüssiger, Stabilisatoren, Wasserretentionsmittel, und/oder Rheologie der Baustoffmischung beeinflussende Additive verwendet.

Bevorzugt umfasst die schnell härtende mineralische Bindemittelmischung Zement in einem Anteil von 5 bis 80 Gew.-%, Beschleuniger auf Titan(IV) Basis in einem Anteil von 0,001 bis 15 Gew.-%, Sulfatträger in einem Anteil von 5 bis 80 Gew.-%, alkalische Komponente in einem Anteil von 0 bis 10 Gew.-%, und Additiv in einem Anteil von 0 bis 15 Gew.-%, wobei, die Gew.-% sich jeweils auf 100 Gew.-% addieren, und die Gew.-% sich jeweils auf die schnell härtende mineralische Bindemittelmischung beziehen. Besonders bevorzugt umfasst die schnell härtende mineralische Bindemittelmischung Zement in einem Anteil von 15 bis 70 Gew.-%, Beschleuniger auf Titan(IV) Basis in einem Anteil von 0,1 bis 6 Gew.-%, Sulfatträger in einem Anteil von 15 bis 70 Gew.-%, alkalische Komponente in einem Anteil von 1 bis 8 Gew.-%, und Additiv in einem Anteil von 1 bis 9 Gew.-%. Ganz besonders bevorzugt umfasst die schnell härtende mineralische Bindemittelmischung Zement in einem Anteil von 25 bis 50 Gew.-%, Beschleuniger auf Titan(IV) Basis in einem Anteil von 0,2 bis 3 Gew.-%, Sulfatträger in einem Anteil von 25 bis 50 Gew.-%, alkalische Komponente in einem Anteil von 1,5 bis 6 Gew.-%, und Additiv in einem Anteil von 2 bis 7 Gew.-%. Ganz ganz besonders bevorzugt umfasst die schnell härtende mineralische Bindemittelmischung Beschleuniger auf Titan(IV) Basis in einem Anteil von 0,3 bis 1 Gew.-%, alkalische Komponente in einem Anteil von 2 bis 3 Gew.-%, und Additiv in einem Anteil von 3 bis 6 Gew.-%.

Bevorzugt enthält die schnell härtende mineralische Bindemittelmischung zusätzlich Lithiumsalze. Erfahrungen haben gezeigt, dass etwa die 3,5-fache Menge an Titanylsulfat im Vergleich zu Lithiumsalzen gute Beschleunigungsergebnisse erzielt. Ziel der vorliegenden Erfindung ist es jedoch, dass die erfindungsgemäßen Beschleuniger auf Titan(IV) Basis die bisher üblichen Lithiumsalze ersetzen und stattdessen verwendet werden. In einer weiteren Ausführungsform umfasst die schnell härtende mineralische Bindemittelmischung keine Alkoxysilane oder Polysiloxane. Auf die Verwendung von Alkoxysilanen oder Polysiloxanen, die aufgrund der Alkoxygruppen einer intermolekularen Polykondensation unter Bildung von -Si-O-Si- Gruppen zugänglich sind, und dadurch die mechanische Festigkeit erhöhen, kann verzichtet werden.

Die vorliegende Erfindung betrifft auch die Verwendung von Titanylsulfat (TiO(SO₄)), Titan(IV)-Sulfat, Titan(IV)Phosphat und/oder Titan(IV)-Oxychlorid (TiOCl2), auch als deren Hydrate und/oder Schwefelsäure Addukte, als Beschleuniger für eine schnell härtende mineralische Bindemittelmischung. Bevorzugt wird die schnell härtende mineralische Bindemittelmischung in einem Baustoff verwendet. Der Baustoff gemäß der vorliegenden Erfindung umfasst bevorzugt Mörtel, Fugenmörtel, Putze, Estriche, Fließestriche, Fertigteile, Wandspachtelmasse, Bodenspachtelmasse, Pflastersteine, Terrassensteine, Bauplatten, Reparaturmörtel, Einpressmörtel, zementäre Bauklebstoffe wie Fliesenkleber, Natursteinkleber, WDV-Kleber, Ankermörtel, flexible mineralische Dichtschlämme und/oder Betone.

Mit der erfindungsmäßigen schnell härtenden mineralischen Bindemittelmischung können sämtliche hydraulisch schnell erhärtende und/oder schnell trocknende zementgebundene Baustoffe wie Mörtel, Putze, Estriche, Fließestriche, Fertigteile, Pflaster- und Terrassensteine, Bauplatten, Reparatur- und Einpressmörtel, zementäre Bauklebstoffe wie Fliesen-, Naturstein- oder WDV -Kleber, Ankermörtel und Betone formuliert werden. Die erfindungsgemäße schnell härtende mineralische Bindemittelmischung wird bevorzugt für die Herstellung von z.B. mineralischen schnell- härtenden Bauklebstoffen verwendet.

Die vorliegende Erfindung betrifft auch ein Verfahren zur Herstellung eines verarbeitungsfähigen Baustoffs, umfassend die Schritte Bereitstellung der schnell härtenden mineralischen Bindemittelmischung (wie oben beschrieben) als Feststoff, Mischung der schnell härtenden mineralischen Bindemittelmischung mit Füllstoffen und/oder Leichtfüllstoffen, um ein Trockenbaustoff zu erhalten, und Mischung des Trockenbaustoffs mit Wasser, um einen verarbeitungsfähigen Baustoff zu erhalten. Füllstoffe und/oder Leichtfüllstoffe im Sinne der vorliegenden Erfindung sind z.B. Sand, Kies, Hohlkugeln, Glasfasern, synthetische Fasern, natürliche Fasern, organische Fasern, anorganische Fasern, Polystyrolkugeln, expandiertes Polystyrol, geblähtes Vulkangestein und/oder Bimsgranulat.

Die vorliegende Erfindung betrifft auch ein Verfahren zur Herstellung eines verarbeitungsfähigen Baustoffs, umfassend die Schritte Mischen von Titanylsulfat (TiO(SO₄)), Titan(IV)-Sulfat, Titan(IV)Phosphat und/oder Titan(IV)-Oxychlorid (TiOCl₂) mit Wasser, um eine erste Mischung zu erhalten, und Mischen der ersten Mischung mit einer Bindemittelmischung enthaltend:
- Zement enthaltend eine oder mehrere Komponenten ausgewählt aus den Verbindungen 3 CaO * Al₂O₃, 12CaO * 7Al₂O₃, CaO * Al₂O₃, CaO * 2Al₂O₃, CaO * 6Al₂O₃ und/oder 4CaO * 3Al₂O₃ * SO₃,
- einen Sulfatträger,
- Füllstoffe und/oder Leichtfüllstoffe,
- optional ein oder mehrere alkalische Komponente, und
- optional ein oder mehrere Additive,
um den verarbeitungsfähigen Baustoff zu erhalten.

Die vorliegende Erfindung betrifft auch ein Verfahren zur Herstellung eines verarbeitungsfähigen Baustoffs, umfassend die Schritte Mischen von Titanylsulfat (TiO(SO₄)), Titan(IV)-Sulfat, Titan(IV)Phosphat und/oder Titan(IV)-Oxychlorid (TiOCl₂) mit Wasser, um eine erste Mischung zu erhalten, Mischen von Wasser mit einer Bindemittelmischung enthaltend:
- Zement enthaltend eine oder mehrere Komponenten ausgewählt aus den Verbindungen 3 CaO * Al₂O₃, 12CaO * 7Al₂O₃, CaO * Al₂O₃, CaO * 2Al₂O₃, CaO * 6Al₂O₃ und/oder 4CaO * 3Al₂O₃ * SO₃,
- einen Sulfatträger,
- Füllstoffe und/oder Leichtfüllstoffe,
- optional mindestens eine alkalische Komponente, und
- optional mindestens ein Additiv,
um eine zweite Mischung zu erhalten, und Mischen der ersten Mischung mit der zweiten Mischung, um den verarbeitungsfähigen Baustoff zu erhalten.

Bevorzugt wird die erste Mischung in einer ersten Leitung bzw. Sprühdüse unter Druck bereitgestellt werden. Bevorzugt wird die zweite Mischung in einer zweiten Leitung bzw. Sprühdüse unter Druck bereitgestellt werden. Die erste Mischung in der ersten Leitung bzw. Sprühdüse und die zweite Mischung in der zweiten Leitung bzw. Sprühdüse können dann bevorzugt in eine dritte Leitung zusammengeführt werden oder gesprüht zusammengeführt werden, um die Mischung der ersten Mischung mit der zweiten Mischung als verarbeitungsfähigen Baustoff zu erhalten. Bevorzugt wird der verarbeitungsfähige Baustoff anschließend auftragen. Das Auftragen findet bevorzugt gleichzeitig mit oder sofort nach, vorzugsweise ≤ 20 Sekunden nach, vorzugsweise ≤ 5 Sekunden nach der Zusammenführung der ersten Mischung mit der zweiten Mischung statt.

Bevorzugt wird der verarbeitungsfähige Baustoff im Tunnelbau oder in einem 3D Betondrucker verwendet.

Die erfindungsgemäße schnell härtende mineralische Bindemittelmischung weist die Eigenschaft auf, dass eine Penetration eines konischen Penetrometers (Konus) nach 3 Stunden bevorzugt 0 mm, besonders bevorzugt nach 2 Stunden 0 mm, ganz besonders bevorzugt nach 1 Stunde 0 mm, beträgt, jeweils gemessen nach der Vicat-Kegel-Methode gemäß DIN EN 13279-2:2014-03. Eine Penetration eines konischen Penetrometers (Konus) nach 5 min. beträgt dabei bevorzugt < 10 mm, besonders bevorzugt < 5 mm, gemessen nach der Vicat-Kegel-Methode gemäß DIN EN 13279-2:2014-03.

Die erfindungsgemäße schnell härtende mineralische Bindemittelmischung weist die Eigenschaft auf, dass eine Fliese mit der Abmessung 50 mm x 50 mm x 5 mm 20 min. nach dem Aufkämmen noch eingelegt werden kann, gemessen nach EN 1348:2007.

Im Folgenden wird die vorliegende Erfindung anhand von mehreren Beispielen und darstellenden Figuren näher erläutert, ohne hierauf beschränkt zu sein. Hierbei gehen aus den Figuren und ihrer Beschreibung weitere erfindungswesentliche Merkmale und Vorteile der Erfindung hervor.
- Fig. 1.: zeigt ein typisches Vicat-Gerät mit Nadel und Freigabemechanismus.
- Fig. 2.: zeigt einen Vergleich der VICAT Messung von Beispiel 1 (A, B und Cc).
- Fig. 3.: zeigt einen Vergleich des Temperaturverlaufs von Beispiel 1 (A, B und Cc).
- Fig. 4.: zeigt einen Vergleich der VICAT Messung von Beispiel 2 (A, B und C).
- Fig. 5.: zeigt einen Vergleich des Temperaturverlaufs von Beispiel 2 (A, B und C).
- Fig. 6.: zeigt einen Vergleich der VICAT Messung von Beispiel 3 (A, B und C).
- Fig. 7.: zeigt einen Vergleich des Temperaturverlaufs von Beispiel 3 (A, B und C).

Die Methoden zur Messung der oben beschriebenen Eigenschaften sind in den Beispielen angegeben.

### Beispiele

Folgende Versuchsmischungen wurden vorbereitet. Dabei wurde jeweils für 30 Sekunden Eingestreut und anschließend 45 Sekunden gemischt.
- Als Tonerdezement (Calcium Aluminat Zement) wurde Caro White der Firma Almatis GmbH oder LaJage Fondue CAC 40 verwendet.
- Als Sulfatträger wurde ein Calciumsulfat Halbhydrat der Firma Remondis SE & Co. KG verwendet.
- Als Zement wurde ein Portlandzement der Firma Spenner GmbH & Co. KG verwendet.
- Als Füller wurde ein handelsüblicher Quarzsand der Type H 31 der Firma Quarzwerke GmbH verwendet.
- Als dispergierbares Kunststoffpulver wurde Vinnapas^{®} 5010N der Firma Wacker Chemie AG verwendet.
- Als Zelluloseether wurde die Type Culminal^{™} C 9133 der Firma Ashland Industries Inc. verwendet.
- Als Lithium Carbonat wurde die Type Lithium Carbonat Technisch von Galaxy Lithium Ltd. verwendet.
- Als erfindungsgemäßer Beschleuniger auf Titan(IV)-Basis wurde Titanylsulfat-Dihydrat exemplarisch verwendet.

### Beispiel 1

| | | **V1A** | **V1B** | **Vice** |
|---|---|---|---|---|
| | Einwaage (g) | M.-% | M.-% | M.-% |
| Tonerdezement CAC 70 | 225,7 | 22,57 | 22,57 | 22,57 |
| Sulfatträger | 152,6 | 15,26 | 15,26 | 15,26 |
| Zement nach EN 197-1 | 30 | 3,00 | 3,00 | 3,00 |
| Füller | 591,7 | 59,17 | 59,17 | 59,17 |
| Lithium Carbonat | | | 0,1 | |
| Titanylsulfat | | | | 0,35 |

### Beispiel 2

| | | **V3-1** | **V3-2** | **V3-3** |
|---|---|---|---|---|
| | Einwaage (g) | M.-% | M.-% | M.-% |
| Tonerdezement CAC 70 | 203,1 | 20,31 | 20,31 | 20,31 |
| Sulfatträger | 167,9 | 16,79 | 16,79 | 16,79 |
| Zement nach EN 197-1 | 30 | 3 | 3 | 3 |
| Füller | 599 | 59,9 | 59,8 | 59,55 |
| Lithium Carbonat | | | 0,1 | |
| Titanylsulfat | | | | 0,35 |

### Beispiel 3

| | | **V4-1** | **V4-2** | **V4-3** |
|---|---|---|---|---|
| | Einwaage (g) | M.-% | M.-% | M.-% |
| Tonerdezement CAC 70 | 203,1 | 20,31 | 20,31 | 20,31 |
| Sulfatträger | 167,9 | 16,79 | 16,79 | 16,79 |
| Zement nach EN 197-1 | 30 | 3 | 3 | 3 |
| Füller | 599 | 59,55 | 59,45 | 59,2 |
| Zelluloseether | 3,5 | 0,35 | 0,35 | 0,35 |
| Lithium Carbonat | | | 0,1 | |
| Titanylsulfat | | | | 0,35 |

### Beispiel 4

| | | **V5-1** | **V5-2** | **V5-3** |
|---|---|---|---|---|
| | Einwaage (g) | M.-% | M.-% | M.-% |
| Tonerdezement CAC 70 | 203,1 | 20,31 | 20,31 | 20,31 |
| Sulfatträger | 167,9 | 16,79 | 16,79 | 16,79 |
| Zement nach EN 197-1 | 30 | 3 | 3 | 3 |
| Füller | 599 | 59,55 | 59,45 | 59,2 |
| Dispergierbares Kunststoffpulver | 40 | 4 | 4 | 4 |
| Zelluloseether | 3,5 | 0,35 | 0,35 | 0,35 |
| Lithium Carbonat | | | 0,1 | |
| Titanylsulfat | | | | 0,35 |

### Beispiel 5

| | | **V6-1** | **V6-2** | **V6-3** |
|---|---|---|---|---|
| | Einwaage (g) | M.-% | M.-% | M.-% |
| Tonerdezement CAC 40 | 203,1 | 20,31 | 20,31 | 20,31 |
| Sulfatträger | 167,9 | 16,79 | 16,79 | 16,79 |
| Zement nach EN 197-1 | 30 | 3 | 3 | 3 |
| Füller | 599 | 59,55 | 59,45 | 59,2 |
| Lithium Carbonat | | | 0,1 | |
| Titanylsulfat | | | | 0,35 |

### Beispiel 6

| | | **V7-1** | **V7-2** | **V7-3** |
|---|---|---|---|---|
| | Einwaage (g) | M.-% | M.-% | M.-% |
| Tonerdezement CAC 40 | 203,1 | 20,31 | 20,31 | 20,31 |
| Sulfatträger | 167,9 | 16,79 | 16,79 | 16,79 |
| Zement nach EN 197-1 | 30 | 3 | 3 | 3 |
| Füller | 599 | 59,55 | 59,45 | 59,2 |
| Dispergierbares Kunststoffpulver | 40 | 4 | 4 | 4 |
| Zelluloseether | 3,5 | 0,35 | 0,35 | 0,35 |
| Lithium Carbonat | | | 0,1 | |
| Titanylsulfat | | | | 0,35 |

Zur Bestimmung der Aushärtung und Beurteilung der Versuchsmischungen wurde die Methode nach VICAT ("Vicat-Kegel-Methode" oder "Vicat Cone Method") herangezogen, wie in DIN EN 13279-2:2014-03 näher beschrieben.

Die Vicat-Kegel-Methode ist die Standardmethode für alle vorgemischten Gipsputze, die Additive und Verzögerer enthalten. Die Vicat-Kegel-Methode verwendet die Eindringtiefe eines konischen Penetrators (Konus) in eine Gips/Wasserpaste im Verlauf des Erhärtens. Dieses Prinzip wird verwendet, um die anfängliche Einstellzeit zu bestimmen.

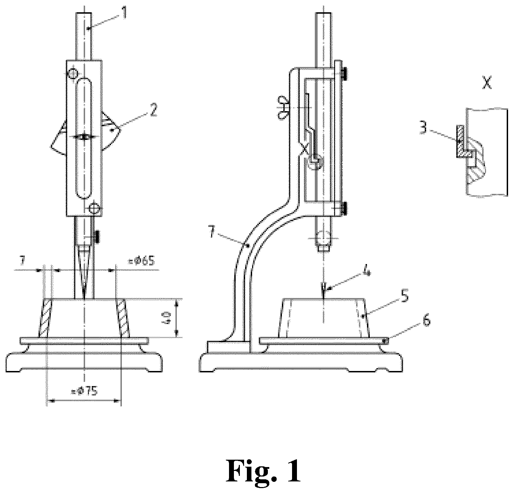

Es werden folgende Geräte verwendet:
a) Vicat-Gerät (siehe Fig. 1);
b) konischer Penetrator (Konus);
c) Glasplatte: etwa 150 mm lang und 150 mm breit;
d) Vicat-Ring;
e) eine gerade Kante von 140 mm Länge;
f) ein Chronometer; sowie
g) ein Mischer und Paddel.

Fig. 1 zeigt ein typisches Vicat-Gerät mit Nadel und Freigabemechanismus. Die Bezugsnummern haben dabei folgende Bedeutung:
1) Führungsschiene;
2) Freigabemechanismus;
3) Federplatte;
4) konischer Penetrometer (Konus);
5) Vicat-Ring;
6) Glasplatte; sowie
7) Sockel.

Der Vicat-Ring wird auf die Glasplatte gelegt, wobei die größere Öffnung in Kontakt mit der Glasplatte steht. Der Gipsputz wird mit der ermittelten Wassermenge gemischt. Die Zeit, zu der der Gips zuerst dem Wasser zugegeben wird, wird notiert (tO). Ein Übermaß an Gips wird auf den Ring übertragen. Mit einer Sägebewegung wird mit der senkrecht gehaltenen geraden Kante das überschüssige Material abgetragen. Der Konus wird mit einem Federteller des Auslösemechanismus auf die Putzoberfläche abgesenkt.

Die Führungsschiene wird zum Testen mit dem Auslösemechanismus geöffnet. Die Zeit zwischen der Konuspenetration sollte nicht größer als 1/20 der anfänglichen Abbindezeit sein. Der Kegel wird zwischen jeder Penetration gereinigt und getrocknet und zwischen jeder Penetrationsmarke sollten mindestens 12 mm liegen. Die Zeit, zu der die Eindringtiefe erreicht wurde, (22 ± 2) mm über der Glasplatte, wird notiert (t1).

Dabei wurden folgende Daten bestimmt.

### Beispiel 1

| | **V1-A** | | **V1-B** | | **V1-Ca** | | **V1-Cb** | | **V1-Cc** | |
|---|---|---|---|---|---|---|---|---|---|---|
| Einwaage (g) | 305 g | | 348,4 g | | 341,13 g | | 303,16 g | | 301,24 g | |
| Wasser | 62,9 g | | 59,49 g | | 59,49 | | 50,0g | | 50,0 g | |
| Li₂CO₃ | 0 g | | 0,38 g | | 0g | | 0 g | | 0 g | |
| TiOSO₄ | 0 g | | 0 g | | 0,4 g | | 0,82 g | | 1,2 g | |
| w/f | 0,21 | | 0,17 | | 0,18 | | 0.17 | | 0,17 | |
| | | | | | | | | | | |

| **Minuten** | **mm** | **°C** | **mm** | **°C** | **mm** | **°C** | **mm** | **°C** | **mm** | **°C** |
|---|---|---|---|---|---|---|---|---|---|---|
| 0 | 40 | 23,6 | 40 | 23,8 | 40 | 23,4 | 40 | 23,6 | 40 | 23.8 |
| 5 | 40 | 23,7 | 4 | 25,9 | 40 | 23,6 | 40 | 24,1 | 5 | 24,2 |
| 10 | 30 | 23,8 | 0 | 28,3 | 40 | 23,9 | 4 | 24,8 | 0 | 25,8 |
| 15 | 18 | 23,8 | 0 | 32,1 | 39 | 24,1 | 0 | 25,2 | 0 | 26,7 |
| 20 | 12 | 23,8 | 0 | 34,3 | 21 | 24,3 | 0 | 26,3 | 0 | 28,0 |
| 25 | 6 | 23,8 | 0 | 35,2 | 4 | 24,5 | 0 | 27,9 | 0 | 29,1 |
| 30 | 0 | 23,8 | 0 | 36,85 | 0 | 24,8 | 0 | 29,0 | 0 | 30,2 |
| 40 | 0 | 23,8 | 0 | 38,2 | 0 | 25,1 | 0 | 30,4 | 0 | 31,8 |
| 50 | 0 | 23,8 | 0 | -- | 0 | -- | 0 | -- | 0 | -- |

Ausgangs Rezeptur für die Einwaage war:

| | **Mol** | **Masse** | **Aktivgehalt** | **Einwaage (g)** | **M.- %** |
|---|---|---|---|---|---|
| Tonerdezement CAC 70 | 1 | 158 | 0,7 | 225,7 g | 22,57 % |
| Sulfatträger | 1 | 145 | 0,95 | 152,6 g | 15,26 % |
| Zement nach EN 197-1 | | | | 30,0 g | 3,00 % |
| Füller | | | | 591,7 g | 59,17 % |
| | | | | 1000 g | |

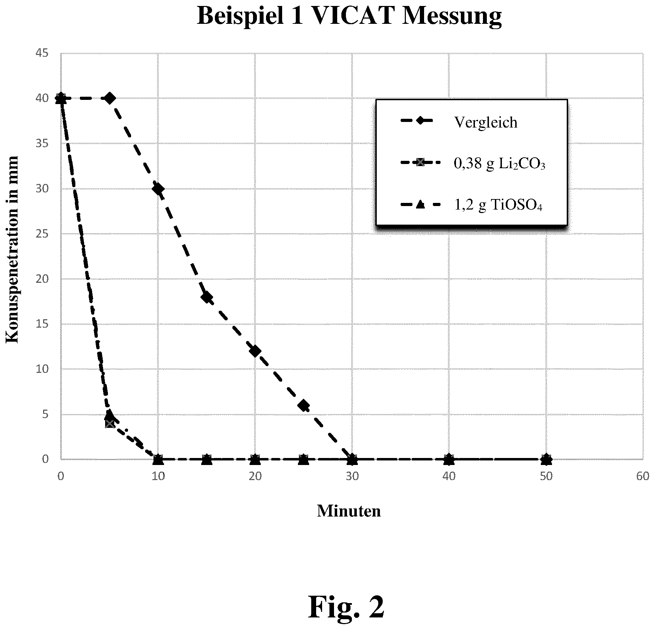

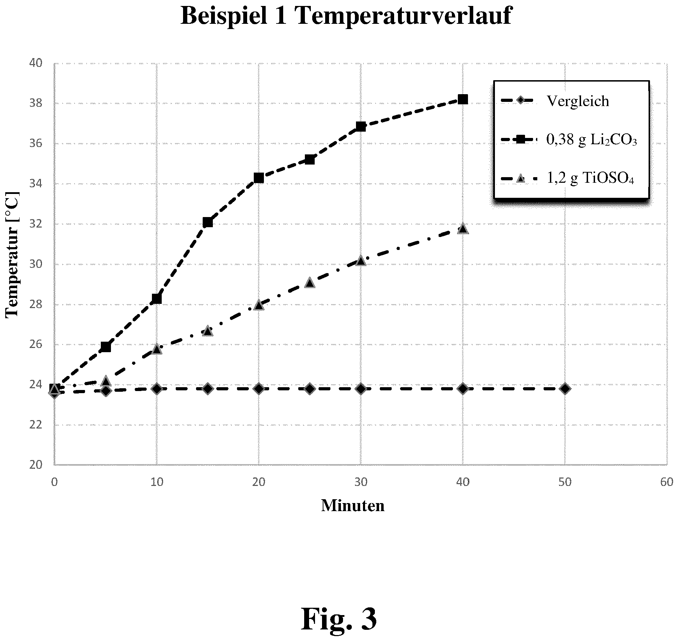

Ein Vergleich von Beispiel 1 A, B und Cc wird in Figs. 2 und 3 dargestellt.

### Beispiel 2

| | **V2-A** | | **V2-B** | | **V2-C** | |
|---|---|---|---|---|---|---|
| Einwaage | 301,42 g | | 301,69 g | | 301,24 g | |
| Wasser | 50 g | | 50 g | | 50 g | |
| Li₂CO₃ | 0 g | | 0,38 g | | 0 g | |
| TiOSO₄ | 0 g | | 0 g | | 1,19 g | |
| w/f | 0,17 | | 0,17 | | 0,17 | |
| | | | | | | |

| **Minuten** | **mm** | **°C** | **mm** | **°C** | **mm** | **°C** |
|---|---|---|---|---|---|---|
| 0 | 40 | 21,3 | 40 | 22,2 | 40 | 22.6 |
| 5 | 40 | 22,2 | 12 | 23,9 | 15 | 23,5 |
| 10 | 28 | 22,7 | 0 | 28,9 | 0 | 24,0 |
| 15 | 16 | 22,8 | 0 | 32,2 | 0 | 24,4 |
| 20 | 8 | 22,9 | 0 | -- | 0 | 25,3 |
| 25 | 2 | 22,9 | 0 | -- | 0 | 26,1 |
| 30 | 0 | 22,9 | 0 | -- | 0 | -- |
| 40 | 0 | -- | 0 | -- | 0 | -- |
| 50 | 0 | -- | 0 | -- | 0 | -- |

Ausgangs Rezeptur für die Einwaage war:

| | **Mol** | **Masse** | **Aktivgehalt** | **Einwaage (g)** | **M.- %** |
|---|---|---|---|---|---|
| Tonerdezement CAC 70 | 1,1 | 158 | 0,7 | 248,3 g | 24,83 % |
| Sulfatträger | 0,9 | 145 | 0,95 | 137,4 g | 13,74 % |
| Zement nach EN 197-1 | | | | 30,0 g | 3,00 % |
| Füller | | | | 584,3 g | 58,43 % |
| | | | | 1000 g | |

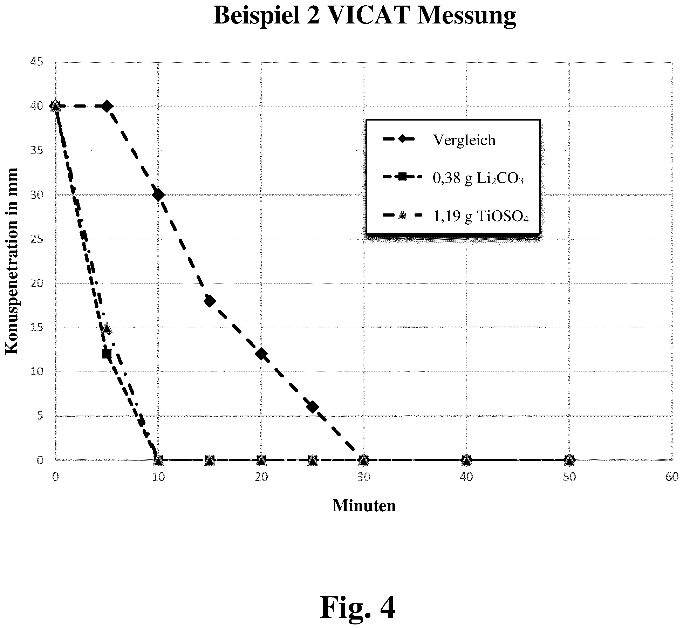

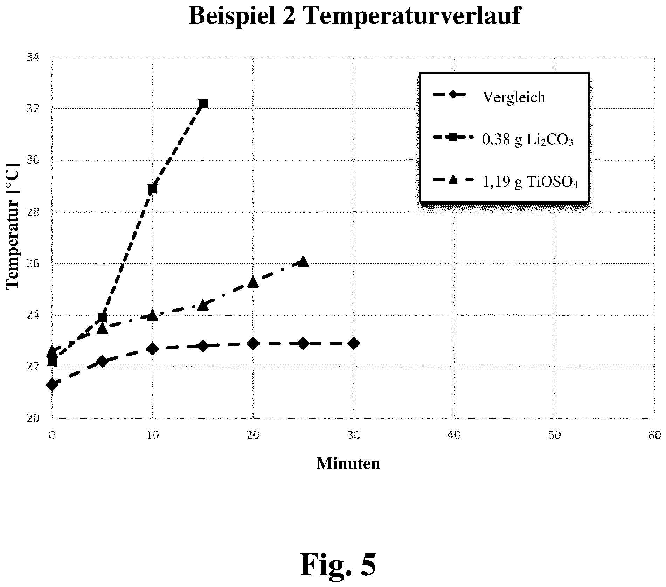

Ein Vergleich von Beispiel 2 A, B und C wird in Figs. 4 und 5 dargestellt.

### Beispiel 3

| | **V3-A** | | **V3-B** | | **V3-C** | |
|---|---|---|---|---|---|---|
| Einw aage | 300,5 g | | 300,6 g | | 301,6 g | |
| Was ser | 50 g | | 50 g | | 50 g | |
| Li₂C O₃ | 0 g | | 0,38 g | | 0 g | |
| TiOS O₄ | 0 g | | 0 g | | 1,22 g | |
| w/ f | 0,17 | | 0,17 | | 0,17 | |
| | | | | | | |

| **Minu ten** | **mm** | **°C** | **mm** | **°C** | **mm** | **°C** |
|---|---|---|---|---|---|---|
| 0 | 40 | 22,8 | 40 | 22,6 | 40 | 23.6 |
| 5 | 40 | 23,5 | 22 | 24,3 | 10 | 24,6 |
| 10 | 40 | 23,7 | 0 | 28,7 | 0 | 25,4 |
| 15 | 18 | 23,7 | 0 | 31,4 | 0 | 26,1 |
| 20 | 9 | 23,7 | 0 | -- | 0 | -- |
| 25 | 4 | 23,6 | 0 | -- | 0 | -- |
| 30 | 0 | 23,6 | 0 | -- | 0 | -- |
| 40 | 0 | -- | 0 | -- | 0 | -- |
| 50 | 0 | -- | 0 | -- | 0 | -- |

Ausgangs Rezeptur für die Einwaage war:

| | **Mol** | **Masse** | **Aktivgehalt** | **Einwaage (g)** | **M.-%** |
|---|---|---|---|---|---|
| Tonerdezement CAC 70 | 0,9 | 158 | 0,7 | 203,1 g | 20,31 % |
| Sulfatträger | 1,1 | 145 | 0,95 | 167,9 g | 16,79 % |
| Zement nach EN 197-1 | | | | 30,0 g | 3,00 % |
| Füller | | | | 599,0 g | 59,90 % |
| | | | | 1000 g | |

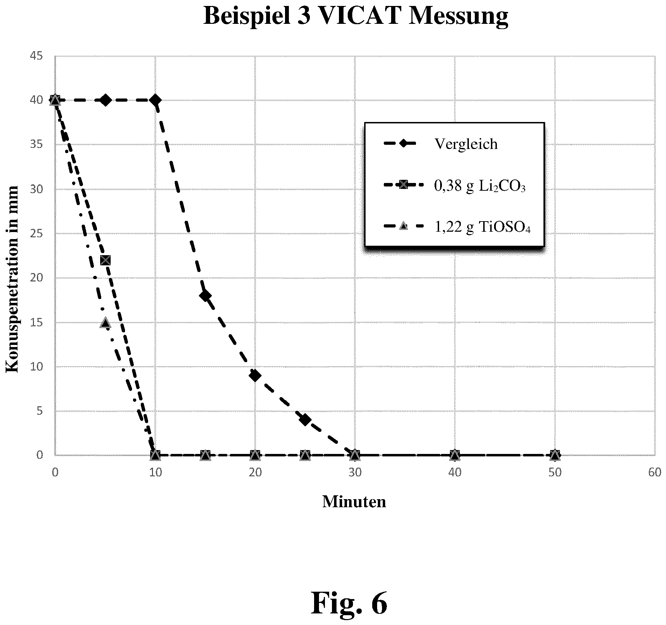

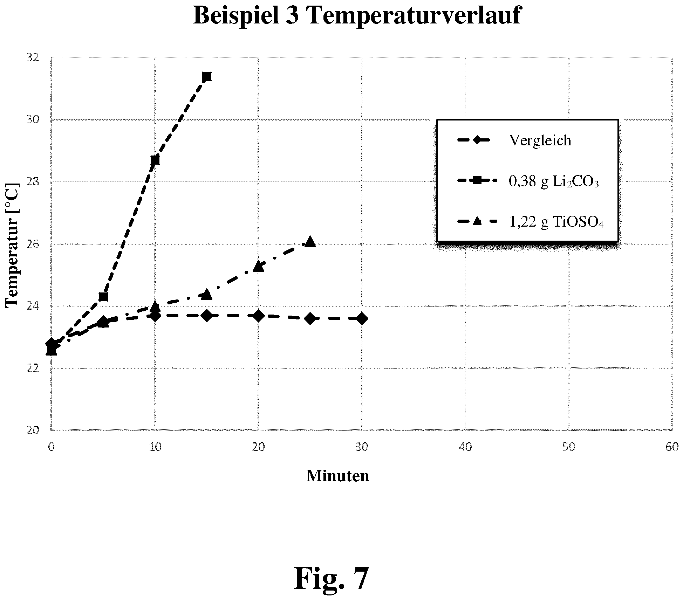

Ein Vergleich von Beispiel 3 A, B und C wird in Figs. 6 und 7 dargestellt.

Figs. 2 bis 7 zeigen deutlich, dass der erfindungsgemäße Beschleuniger auf Titan(IV) Basis eine Aushärtung der Versuchsmischung gegenüber einer Versuchsmischung ohne Beschleuniger auf Titan(IV) Basis beschleunigt. Figs. 2 bis 7 zeigen auch, dass der erfindungsgemäße Beschleuniger auf Titan(IV) Basis ferner eine ähnliche Aushärtungszeit erzielt wie bekannte Beschleuniger, und insbesondere Li₂CO₃.

Der erfindungsgemäße Beschleuniger auf Titan(IV) Basis kann auch vorteilhaft für die Herstellung von z.B. mineralischen schnell härtenden Bauklebstoffen verwendet werden. Um dies zu belegen wurden die Haftzugfestigkeiten einer Beispielmischung für mineralische Bauklebstoffe nach Beispiel 4 und Beispiel 6 bestimmt. Bei jedem Versuch werden je 5 Fliesen der Abmessung 50 x 50 x 5 mm sofort und 20 Minuten nach dem Aufkämmen der Bauklebstoffmischung entsprechend EN 1348:2007 eingelegt und geprüft. EN 1348:2007 legt ein Verfahren zur Bestimmung der Haftzugfestigkeit von zementhaltigen Mörteln für keramische Fliesen und Platten fest und gilt für alle zementhaltigen Mörtel ohne und mit zusätzlichen Komponenten für die Verarbeitung keramischer Fliesen und Platten an Wand und Boden, für innen und außen. Der Auszugsversuch erfolgt nach 6 Stunden. Folgende Daten wurden dabei erhalten:
**Beispiel 4-2 (V5-2) - 0,1 % Li₂CO₃** 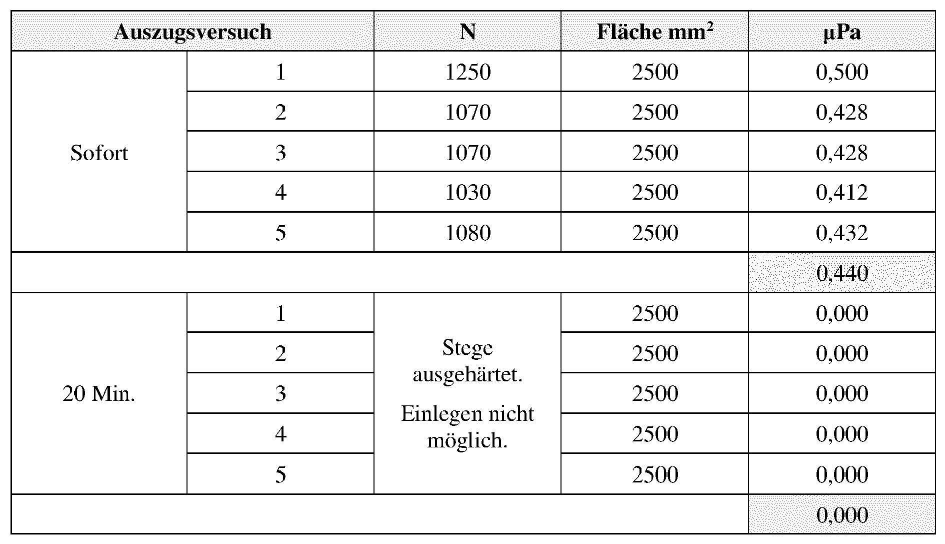
**Beispiel 4-3 (V5-3) - 0,35 % TiO(SO₄)** 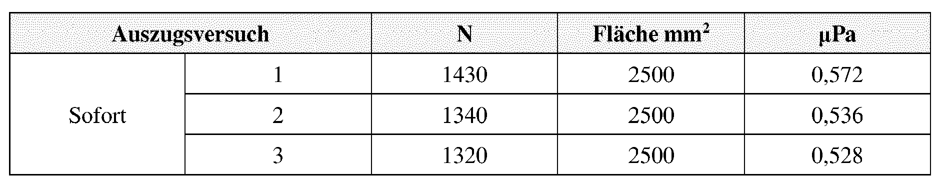 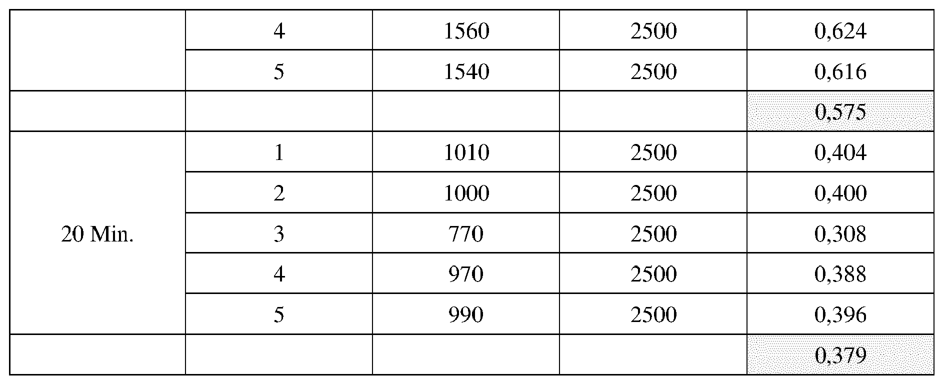
**Beispiel 6-2 (V 7-2) - 0,1 % Li₂CO₃** 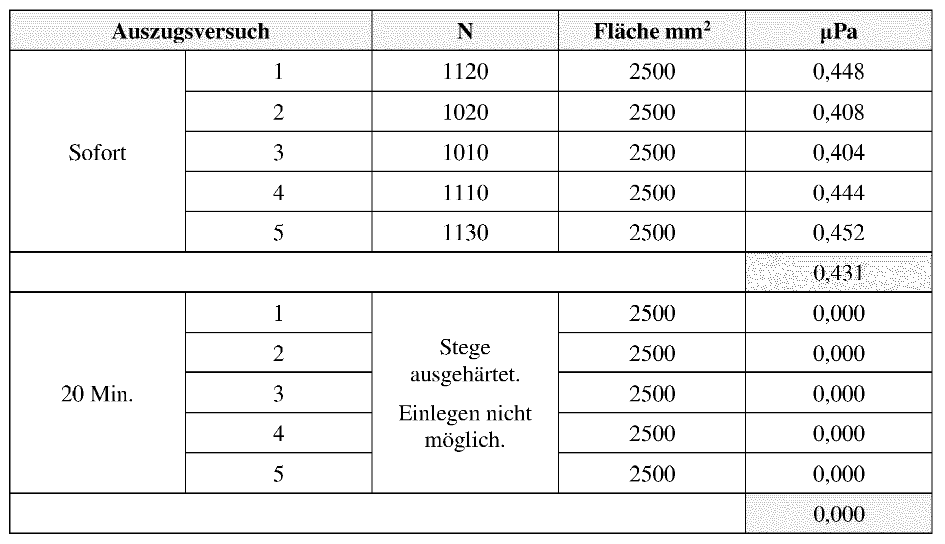
**Beispiel 6-3 (V 7-3)- 0,35 % TiO(SO₄)**

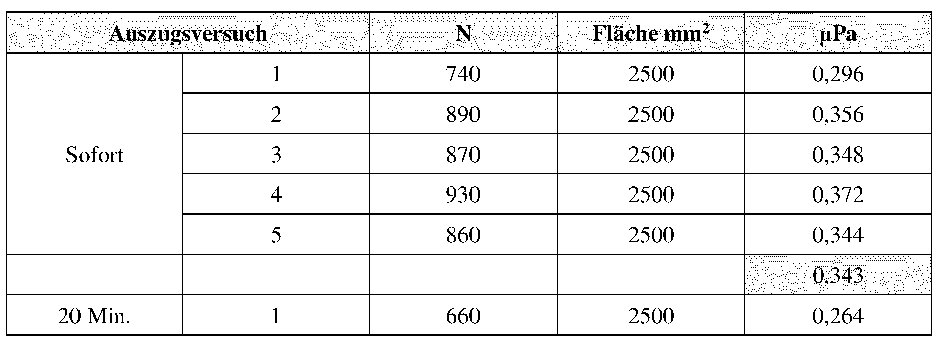

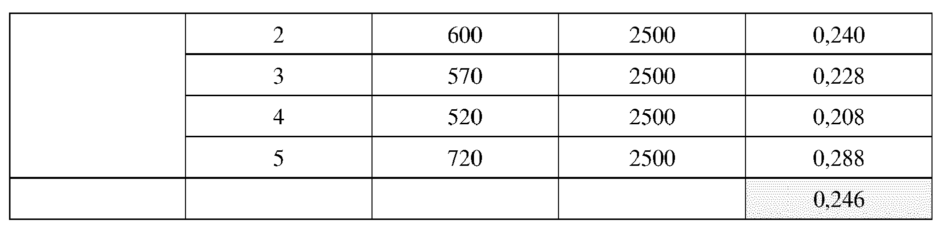

Diese Versuche belegen, dass der erfindungsgemäße Beschleuniger auf Titan(IV) Basis deutliche Vorteile gegenüber dem Stand der Technik enthaltend Lithiumcarbonat aufweist. Beispiele 4-2 und 6-2 belegen, dass eine Einlage von Fließen 20 min. nach dem Aufkämmen überhaupt nicht möglich ist. Beispiele 4-3 und 6-3 belegen im Gegenteil dazu, dass eine Fliesenbelegung mit schnell härtenden Bauklebstoffen enthaltend den erfindungsgemäßen Beschleuniger auf Titan(IV) Basis immer noch 20 min. nach dem Aufkämmen möglich ist. Die schnell härtende mineralische Bindemittelmischung weist deshalb bevorzugt die Eigenschaft auf, dass eine Fliese mit der Abmessung 50 mm x 50 mm x 5 mm auch 20 min nach dem Aufkämmen eingelegt werden kann (gemessen nach EN 1348:2007). Schnell härtende Bauklebstoffe enthaltend den erfindungsgemäßen Beschleuniger auf Titan(IV) Basis weisen deshalb die ungewöhnliche aber gewünschte Eigenschaft auf, zwar schnell auszuhärten, aber langsam genug auszuhärten, um eine Bearbeitung, z.B. eine Fliesenbelegung nach dem Aufkämmen, zu ermöglichen. Dies erlaubt Zeit für eine bessere Verarbeitung und erzeugt weniger Abfälle ohne Steuerungsadditive.

Der Ausdruck "enthaltend" in dieser Beschreibung und in den Ansprüchen, sowie Variationen davon, bedeutet, dass die spezifizierten Merkmale, Schritte, Komponenten und/oder Zahlen enthalten/umfasst sind. "Enthaltend" ist nicht so auszulegen, dass andere Merkmale, Schritte Komponenten und/oder Zahlen ausgeschlossen sind.

Die vorliegende Erfindung ist nicht auf die in der Beschreibung beschriebenen Ausführungsformen beschränkt; es wird ausdrücklich auch auf die beigefügten Ansprüche verwiesen, die Bestandteil dieser Beschreibung sind.

## Patentansprüche

1. Schnell härtende mineralische Bindemittelmischung enthaltend:
einen Beschleuniger auf Titan(IV) Basis;
Zement enthaltend eine oder mehrere Komponenten ausgewählt aus den Verbindungen 3 CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ und/oder 4CaO ^{∗} 3Al₂O₃ ^{∗} SO₃;
einen Sulfatträger in einem Anteil von 15 bis 80 Gew.-%, bevorzugt 25 bis 50 Gew.-%;
optional ein oder mehrere alkalische Komponente; und
optional ein oder mehrere Additive,
wobei,
das Gew.-% sich auf die schnell härtende mineralische Bindemittelmischung bezieht.

2. Schnell härtende mineralische Bindemittelmischung gemäß Anspruch 1, **dadurch gekennzeichnet, dass** Titanylsulfat (TiO(SO₄)), Titan(IV)-Sulfat, Titan(IV)Phosphat und/oder Titan(IV)-Oxychlorid (TiOCl₂) als Beschleuniger auf Titan(IV) Basis verwendet wird.

3. Schnell härtende mineralische Bindemittelmischung gemäß Anspruch 2, **dadurch gekennzeichnet, dass**,
Titanylsulfat (TiO(SO₄)) in einem Anteil von 0,01 bis 6 Gew.-%, bevorzugt 0,1 bis 3 Gew.-%, besonders bevorzugt 0,2 bis 0,8 Gew.-%, und/oder
Titan(IV)-Oxychlorid (TiOCl₂) in einem Anteil von 0,01 bis 6 Gew.-%, bevorzugt 0,1 bis 3 Gew.-%, besonders bevorzugt 0,2 bis 0,8 Gew.-%,
jeweils bezogen auf das Gewicht der schnell härtenden mineralischen Bindemittelmischung, verwendet wird.

4. Schnell härtende mineralische Bindemittelmischung gemäß einem oder mehreren der Ansprüche 1 bis 3, **dadurch gekennzeichnet, dass** der Titan(IV)-Beschleuniger,
als Feststoff,
als wässrig-basierte Suspension,
als Lösung, und/oder
auf einem Träger absorbiert,
der schnell härtenden mineralischen Bindemittelmischung zugemischt wird.

5. Schnell härtende mineralische Bindemittelmischung gemäß einem oder mehreren der Ansprüche 1 bis 4, **dadurch gekennzeichnet, dass** das Zement ein Tonerdezement und/oder Portlandzement ist.

6. Schnell härtende mineralische Bindemittelmischung gemäß einem oder mehreren der Ansprüche 1 bis 5, **dadurch gekennzeichnet, dass** das Molarverhältnis Beschleuniger auf Titan(IV) Basis zu der Verbindung CaO in den Verbindungen (mmol Beschleuniger auf Titan(IV) Basis : mol Verbindung CaO in den Verbindungen) von 0,1 bis 300, bevorzugt 2 bis 100, besonders bevorzugt 3 bis 50, ist.

7. Schnell härtende mineralische Bindemittelmischung gemäß einem oder mehreren der Ansprüche 1 bis 6, **dadurch gekennzeichnet, dass** Calciumsulfat, Magnesiumsulfat, Natriumsulfat, Kaliumsulfat, Eisensulfat, Mangansulfat, Kobaltsulfat, Nickelsulfat und/oder Kaliumperoxomonosulfat, bevorzugt Calciumsulfat und/oder Magnesiumsulfat, als Sulfatträger verwendet wird.

8. Schnell härtende mineralische Bindemittelmischung gemäß einem oder mehreren der Ansprüche 1 bis 7, **dadurch gekennzeichnet, dass** als alkalischer Aktivator Portlandzement, Alkalioxide, Erdalkalioxide, Alkalihydroxide, und/oder Erdalkalihydroxide und deren Gemische verwendet werden.

9. Schnell härtende mineralische Bindemittelmischung gemäß einem oder mehreren der Ansprüche 1 bis 8, **dadurch gekennzeichnet, dass** als Additiv Abbindeverzögerer, Abbindebeschleuniger, dispergierbare Kunststoffpulver, Entschäumer, Hydrophobierungsmittel, Luftporenmittel, Verflüssiger, Stabilisatoren, Wasserretentionsmittel, und/oder Rheologie der Baustoffmischung beeinflussende Additive verwendet werden.

10. Schnell härtende mineralische Bindemittelmischung gemäß einem oder mehreren der Ansprüche 1 bis 9, **dadurch gekennzeichnet, dass** die mineralische Bindemittelmischung umfasst:
Zement in einem Anteil von 5 bis 80 Gew.-%, bevorzugt 15 bis 70 Gew.-%, besonders bevorzugt 25 bis 50 Gew.-%;
Beschleuniger auf Titan(IV) Basis in einem Anteil von 0,001 bis 15 Gew.-%, bevorzugt 0,1 bis 6 Gew.-%, besonders bevorzugt 0,2 bis 3 Gew.-%, ganz besonders bevorzugt 0,3 bis 1 Gew.-%;
Sulfatträger in einem Anteil von 15 bis 80 Gew.-%, bevorzugt 25 bis 50 Gew.-%;
alkalische Komponente in einem Anteil von 0 bis 10 Gew.-%, bevorzugt 1 bis 8 Gew.-%, besonders bevorzugt 1,5 bis 6 Gew.-%, ganz besonders bevorzugt 2 bis 3 Gew.-%; und
Additiv in einem Anteil von 0 bis 15 Gew.-%, bevorzugt 1 bis 9 Gew.-%, besonders bevorzugt 2 bis 7 Gew.-%, ganz besonders bevorzugt 3 bis 6 Gew.-%,
wobei,
die Gew.-% sich jeweils auf 100 Gew.-% addieren, und
die Gew.-% sich jeweils auf die schnell härtende mineralische Bindemittelmischung beziehen.

11. Schnell härtende mineralische Bindemittelmischung gemäß einem oder mehreren der Ansprüche 1 bis 10, **dadurch gekennzeichnet, dass** die schnell härtende mineralische Bindemittelmischung zusätzlich Lithiumsalze enthält.

12. Verwendung von Titanylsulfat (TiO(SO₄)), Titan(IV)-Sulfat, Titan(IV)Phosphat und/oder Titan(IV)-Oxychlorid (TiOCl₂) als Beschleuniger für eine schnell härtende mineralische Bindemittelmischung gemäß einem oder mehreren der Ansprüche 1 bis 11.

13. Verwendung der schnell härtenden mineralischen Bindemittelmischung gemäß einem oder mehreren der Ansprüche 1 bis 11 in einem Baustoff.

14. Verwendung der schnell härtenden mineralischen Bindemittelmischung gemäß Anspruch 13, **dadurch gekennzeichnet, dass** der Baustoff Mörtel, Fugenmörtel, Putze, Estriche, Fließestriche, Fertigteile, Wandspachtelmasse, Bodenspachtelmasse, Pflastersteine, Terrassensteine, Bauplatten, Reparaturmörtel, Einpressmörtel, zementäre Bauklebstoffe wie Fliesenkleber, Natursteinkleber, WDV-Kleber, Ankermörtel, flexible mineralische Dichtschlämme und/oder Betone umfasst.

15. Verfahren zur Herstellung eines verarbeitungsfähigen Baustoffs, umfassend die Schritte:
Bereitstellung der schnell härtenden mineralischen Bindemittelmischung gemäß einem oder mehreren der Ansprüche 1 bis 11 als Feststoff;
Mischung der schnell härtenden mineralischen Bindemittelmischung mit Füllstoffen und/oder Leichtfüllstoffen, um ein Trockenbaustoff zu erhalten; und
Mischung des Trockenbaustoffs mit Wasser, um einen verarbeitungsfähigen Baustoff zu erhalten.

16. Verfahren zur Herstellung eines verarbeitungsfähigen Baustoffs, umfassend die Schritte:
Mischen von Titanylsulfat (TiO(SO₄)), Titan(IV)-Sulfat, Titan(IV)Phosphat und/oder Titan(IV)-Oxychlorid (TiOCl₂) mit Wasser, um eine erste Mischung zu erhalten; und
Mischen der ersten Mischung mit einer Bindemittelmischung enthaltend:
• Zement enthaltend eine oder mehrere Komponenten ausgewählt aus den Verbindungen 3 CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ und/oder 4CaO ^{∗} 3Al₂O₃ ^{∗} SO₃,
• einen Sulfatträger in einem Anteil von 15 bis 80 Gew.-%, bevorzugt 25 bis 50 Gew.-%,
• Füllstoffe und/oder Leichtfüllstoffe,
• optional ein oder mehrere alkalische Komponente, und
• optional ein oder mehrere Additive,
um den verarbeitungsfähigen Baustoff zu erhalten.

17. Verfahren zur Herstellung eines verarbeitungsfähigen Baustoffs, umfassend die Schritte:
Mischen von Titanylsulfat (TiO(SO₄)), Titan(IV)-Sulfat, Titan(IV)Phosphat und/oder Titan(IV)-Oxychlorid (TiOCl₂) mit Wasser, um eine erste Mischung zu erhalten;
Mischen von Wasser mit einer Bindemittelmischung enthaltend:
• Zement enthaltend eine oder mehrere Komponenten ausgewählt aus den Verbindungen 3 CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ und/oder 4CaO ^{∗} 3Al₂O₃ ^{∗} SO₃,
• einen Sulfatträger in einem Anteil von 15 bis 80 Gew.-%, bevorzugt 25 bis 50 Gew.-%,
• Füllstoffe und/oder Leichtfüllstoffe,
• optional mindestens eine alkalische Komponente, und
• optional mindestens ein Additiv,
um eine zweite Mischung zu erhalten; und
Mischen der ersten Mischung mit der zweiten Mischung, um den verarbeitungsfähigen Baustoff zu erhalten.

18. Verwendung eines nach den Ansprüchen 15-17 definierten Verfahrens hergestellten verarbeitungsfähigen Baustoffs im Tunnelbau oder in einem 3D Betondrucker.

## Claims

1. A fast-curing mineral binder mixture comprising:
a titanium(IV)-based accelerator;
cement comprising one or more components selected from the compounds 3CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ and/or 4CaO ^{∗} 3Al₂O₃ ^{∗} SO₃;
a sulfate carrier in a fraction of 15 to 80 wt%, preferably 25 to 50 wt%;
optionally one or more than one alkaline component; and
optionally one or more additives,
where
the wt% is based on the fast-curing mineral binder mixture.

2. The fast-curing mineral binder mixture as claimed in claim 1, **characterized in that** titanyl sulfate (TiO(SO₄)), titanium(IV) sulfate, titanium(IV) phosphate and/or titanium(IV) oxychloride (TiOCl₂) is used as titanium(IV)-based accelerator.

3. The fast-curing mineral binder mixture as claimed in claim 2, **characterized in that** titanyl sulfate (TiO(SO₄)) in a fraction of 0.01 to 6 wt%, preferably 0.1 to 3 wt%, more preferably 0.2 to 0.8 wt%, and/or
titanium(IV) oxychloride (TiOCl₂) in a fraction of 0.01 to 6 wt%, preferably 0.1 to 3 wt%, more preferably 0.2 to 0.8 wt%,
based in each case on the weight of the fast-curing mineral binder mixture, is used.

4. The fast-curing mineral binder mixture as claimed in one or more of claims 1 to 3, **characterized in that** the titanium(IV) accelerator is admixed
as a solid,
as an aqueous-based suspension,
as a solution, and/or
absorbed on a carrier
to the fast-curing mineral binder mixture.

5. The fast-curing mineral binder mixture as claimed in one or more of claims 1 to 4, **characterized in that** the cement is a high-alumina cement and/or portland cement.

6. The fast-curing mineral binder mixture as claimed in one or more of claims 1 to 5, **characterized in that** the molar ratio of titanium(IV)-based accelerator to the compound CaO in the compounds (mmol of titanium(IV)-based accelerator : mol of compound CaO in the compounds) is from 0.1 to 300, preferably 2 to 100, more preferably 3 to 50.

7. The fast-curing mineral binder mixture as claimed in one or more of claims 1 to 6, **characterized in that** calcium sulfate, magnesium sulfate, sodium sulfate, potassium sulfate, iron sulfate, manganese sulfate, cobalt sulfate, nickel sulfate and/or potassium peroxomonosulfate, preferably calcium sulfate and/or magnesium sulfate, is used as sulfate carrier.

8. The fast-curing mineral binder mixture as claimed in one or more of claims 1 to 7, **characterized in that** alkaline activator used comprises portland cement, alkali metal oxides, alkaline earth metal oxides, alkali metal hydroxides and/or alkaline earth metal hydroxides and mixtures thereof.

9. The fast-curing mineral binder mixture as claimed in one or more of claims 1 to 8, **characterized in that** additive used comprises setting retarders, setting accelerators, dispersible plastics powders, defoamers, water repellents, air entrainers, plasticizers, stabilizers, water retention agents and/or additives influencing building material mixture rheology.

10. The fast-curing mineral binder mixture as claimed in one or more of claims 1 to 9, **characterized in that** the mineral binder mixture comprises:
cement in a fraction of 5 to 80 wt%, preferably 15 to 70 wt%, more preferably 25 to 50 wt%;
titanium(IV)-based accelerator in a fraction of 0.001 to 15 wt%, preferably 0.1 to 6 wt%, more preferably 0.2 to 3 wt%, very preferably 0.3 to 1 wt%;
sulfate carrier in a fraction of 15 to 80 wt%, preferably 25 to 50 wt%;
alkaline component in a fraction of 0 to 10 wt%, preferably 1 to 8 wt%, more preferably 1.5 to 6 wt%, very preferably 2 to 3 wt%; and
additive in a fraction of 0 to 15 wt%, preferably 1 to 9 wt%, more preferably 2 to 7 wt%, very preferably 3 to 6 wt%,
where
the wt% add up in each case to 100 wt%, and
the wt% are based in each case on the fast-curing mineral binder mixture.

11. The fast-curing mineral binder mixture as claimed in one or more of claims 1 to 10, **characterized in that** the fast-curing mineral binder mixture additionally comprises lithium salts.

12. The use of titanyl sulfate (TiO(SO₄)), titanium(IV) sulfate, titanium(IV) phosphate and/or titanium(IV) oxychloride (TiOCl₂) as accelerator for a fast-curing mineral binder mixture as claimed in one or more of claims 1 to 11.

13. The use of the fast-curing mineral binder mixture as claimed in one or more of claims 1 to 11 in a building material.

14. The use of the fast-curing mineral binder mixture, as claimed in claim 13, **characterized in that** the building material comprises mortars, jointing mortars, renders, screeds, self-leveling screeds, prefabricated parts, wall-filling compound, floor-filling compound, paving stones, patio stones, building slabs, repair mortars, injection mortars, cementitious building adhesives such as tile adhesives, natural stone adhesives, EIFS adhesives, anchoring mortars, flexible mineral grouts and/or concretes.

15. A method for producing a workable building material, comprising the steps of:
providing the fast-curing mineral binder mixture as claimed in one or more of claims 1 to 11 as a solid;
mixing the fast-curing mineral binder mixture with regular fillers and/or lightweight fillers, to give a dry building material; and
mixing the dry building material with water, to give a workable building material.

16. A method for producing a workable building material, comprising the steps of:
mixing titanyl sulfate (TiO(SO₄)), titanium(IV) sulfate, titanium(IV) phosphate and/or titanium(IV) oxychloride (TiOCl₂) with water, to give a first mixture; and
mixing the first mixture with a binder mixture comprising:
• cement comprising one or more components selected from the compounds 3CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ and/or 4CaO ^{∗} 3Al₂O₃ ^{∗} SO₃,
• a sulfate carrier in a fraction of 15 to 80 wt%, preferably 25 to 50 wt%,
• regular fillers and/or lightweight fillers,
• optionally one or more than one alkaline component, and
• optionally one or more additives,
to give the workable building material.

17. A method for producing a workable building material, comprising the steps of:
mixing titanyl sulfate (TiO(SO₄)), titanium(IV) sulfate, titanium(IV) phosphate and/or titanium(IV) oxychloride (TiOCl₂) with water, to give a first mixture;
mixing water with a binder mixture comprising:
• cement comprising one or more components selected from the compounds 3CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ and/or 4CaO ^{∗} 3Al₂O₃ ^{∗} SO₃,
• a sulfate carrier in a fraction of 15 to 80 wt%, preferably 25 to 50 wt%,
• regular fillers and/or lightweight fillers,
• optionally at least one alkaline component, and
• optionally at least one additive,
to give a second mixture; and
mixing the first mixture with the second mixture, to give the workable building material.

18. The use of a workable material produced by a method defined according to claims 15-17 in tunnel construction or in a 3D concrete printer.

## Revendications

1. Mélange de liants minéraux à durcissement rapide contenant
un accélérateur à base de titane(IV) ;
un ciment contenant un ou plusieurs composants choisis parmi les composés 3 CaO*Al₂O₃, 12CaO*7Al₂O₃, CaO*Al₂O₃, CaO*2Al₂O₃, CaO*6Al₂O₃ et/ou 4CaO*3Al₂O₃*SO₃ ;
un support de sulfate selon une proportion de 15 à 80 % en poids, de préférence de 25 à 50 % en poids ;
éventuellement un ou plusieurs composants alcalins ; et
éventuellement un ou plusieurs additifs,
dans lequel
le pourcentage en poids se rapporte au mélange de liants minéraux à durcissement rapide.

2. Mélange de liants minéraux à durcissement rapide selon la revendication 1, **caractérisé en ce qu'**on utilise en tant qu'accélérateur à base de titane(IV) du sulfate de titanyle (TiO(SO₄)), du sulfate de titane(IV), du phosphate de titane(IV) et/ou de l'oxychlorure de titane (IV) (TiOCl₂) .

3. Mélange de liants minéraux à durcissement rapide selon la revendication 2, **caractérisé en ce qu'**on utilise
le sulfate de titanyle (TiO(SO₄)) selon une proportion de 0,01 à 6 % en poids, de préférence de 0,1 à 3 % en poids, d'une manière particulièrement préférée de 0,2 à 0,8 % en poids, et/ou
l'oxychlorure de titane(IV) (TiOCl₂) selon une proportion de 0,01 à 6 % en poids, de préférence de 0,1 à 3 % en poids, d'une manière particulièrement préférée de 0,2 à 0,8 % en poids,
chacun par rapport au poids total du mélange de liants minéraux à durcissement rapide.

4. Mélange de liants minéraux à durcissement rapide selon l'une ou plusieurs des revendications 1 à 3, **caractérisé en ce que** l'accélérateur au titane(IV) est,
sous forme solide,
sous forme d'une suspension à base aqueuse,
sous forme d'une solution et/ou
absorbé sur un support,
ajouté au mélange de liants minéraux à durcissement rapide.

5. Mélange de liants minéraux à durcissement rapide selon l'une ou plusieurs des revendications 1 à 4, **caractérisé en ce que** le ciment est un ciment alumineux et/ou un ciment Portland.

6. Mélange de liants minéraux à durcissement rapide selon l'une ou plusieurs des revendications 1 à 5, **caractérisé en ce que** le rapport en moles de l'accélérateur à base de titane(IV) au composé CaO dans les composés est (mmol d'accélérateur à base de titane (IV) : mol du composé CaO dans les composés), de 0,1 à 300, de préférence de 2 à 100, d'une manière particulièrement préférée de 3 à 50.

7. Mélange de liants minéraux à durcissement rapide selon l'une ou plusieurs des revendications 1 à 6, **caractérisé en ce qu'**on utilise en tant que support de sulfate du sulfate de calcium, du sulfate de magnésium, du sulfate de sodium, du sulfate de potassium, du sulfate de fer, du sulfate de manganèse, du sulfate de cobalt, du sulfate de nickel et/ou du peroxomonosulfate de potassium, de préférence du sulfate de calcium et/ou du sulfate de magnésium.

8. Mélange de liants minéraux à durcissement rapide selon l'une ou plusieurs des revendications 1 à 7, **caractérisé en ce qu'**on utilise comme activateur alcalin du ciment Portland, des oxydes de métaux alcalins, des oxydes de métaux alcalino-terreux, des hydroxydes de métaux alcalins et/ou des hydroxydes de métaux alcalino-terreux et des mélanges de ceux-ci.

9. Mélange de liants minéraux à durcissement rapide selon l'une ou plusieurs des revendications 1 à 8, **caractérisé en ce qu'**on utilise comme additif des retardateurs de prise, des accélérateurs de prise, des poudres plastiques dispersibles, des antimoussants, des agents d'hydrophobisation, des entraîneurs d'air, des plastifiants-réducteurs d'eau, des stabilisants, des plastifiants rétenteurs d'eau et/ou des additifs influant sur la rhéologie du mélange de matériaux de construction.

10. Mélange de liants minéraux à durcissement rapide selon l'une ou plusieurs des revendications 1 à 9, **caractérisé en ce que** le mélange de liants minéraux comprend :
du ciment selon une proportion de 5 à 80 % en poids, de préférence de 15 à 70 % en poids, d'une manière particulièrement préférée de 25 à 50 % en poids ;
un accélérateur à base de titane(IV) selon une proportion de 0,001 à 15 % en poids, de préférence de 0,1 à 6 % en poids, d'une manière particulièrement préférée de 0,2 à 3 % en poids, tout spécialement de 0,3 à 1 % en poids ;
un support de sulfate selon une proportion de 15 à 80 % en poids, de préférence de 25 à 50 % en poids ;
un composant alcalin selon une proportion de 0 à 10 % en poids, de préférence de 1 à 8 % en poids, d'une manière particulièrement préférée de 1,5 à 6 % en poids, tout spécialement de 2 à 3 % en poids ; et
un additif selon une proportion de 0 à 15 % en poids, de préférence de 1 à 9 % en poids, d'une manière particulièrement préférée de 2 à 7 % en poids, tout spécialement de 3 à 6 % en poids,
dans lequel
la somme des pourcentages en poids est de 100 % en poids, et
les pourcentages en poids se rapportent chacun au mélange de liants minéraux à durcissement rapide.

11. Mélange de liants minéraux à durcissement rapide selon l'une ou plusieurs des revendications 1 à 10, **caractérisé en ce que** le mélange de liants minéraux à durcissement rapide contient en outre des sels de lithium.

12. Utilisation de sulfate de titanyle (TiO(SO₄)), de sulfate de titane(IV), de phosphate de titane(IV) et/ou d'oxychlorure de titane(IV) (TiOCl₂) comme accélérateur pour un mélange de liants minéraux à durcissement rapide selon l'une ou plusieurs des revendications 1 à 11.

13. Utilisation du mélange de liants minéraux à durcissement rapide selon l'une ou plusieurs des revendications 1 à 11 dans un matériau de construction.

14. Utilisation du mélange de liants minéraux à durcissement rapide selon la revendication 13, **caractérisée en ce que** le matériau de construction est un mortier, un mortier de jointoiement, des enduits, des chapes, des chapes fluides, des composants, un enduit de rebouchage pour murs, un enduit de rebouchage pour le sol, des pavés de grès dur, des carreaux de terrasse, des dalles de construction, un mortier de réparation, un mortier d'injection, des adhésifs cimentaires pour la construction, tels que des colles pour carrelage, des colles pour pierres naturelles, une colle pour composite isolant thermique, un mortier d'ancrage, des suspensions minérales d'étanchéité flexibles et/ou des bétons.

15. Procédé de fabrication d'un matériau de construction maniable, comprenant les étapes suivantes :
fourniture du mélange de liants minéraux à durcissement rapide selon l'une ou plusieurs des revendications 1 à 11 sous forme solide ;
mélange du mélange de liants minéraux à durcissement rapide avec des matières de charge et/ou des charges légères, pour obtenir un matériau de construction sec ; et
mélange du matériau de construction sec avec de l'eau, pour obtenir un matériau de construction maniable.

16. Procédé de fabrication d'un matériau de construction maniable, comprenant les étapes suivantes :
mélange de sulfate de titanyle (TiO(SO₄)), de sulfate de titane(IV), de phosphate de titane(IV) et/ou d'oxychlorure de titane(IV) (TiOCl₂) avec de l'eau, pour obtenir un premier mélange ; et
mélange du premier mélange avec un mélange de liants contenant :
• un ciment contenant un ou plusieurs composants choisis parmi les composés 3CaO*Al₂O₃, 12CaO*7Al₂O₃, CaO*Al₂O₃, CaO*2Al₂O₃, CaO*6Al₂O₃ et/ou 4CaO*3Al₂O₃*SO₃,
• un support de sulfate selon une proportion de 15 à 80 % en poids, de préférence de 25 à 50 % en poids,
• des charges et/ou des charges légères,
• éventuellement un ou plusieurs composants alcalins, et
• éventuellement un ou plusieurs additifs,
pour obtenir un matériau de construction maniable.

17. Procédé de fabrication d'un matériau de construction maniable, comprenant les étapes suivantes :
mélange de sulfate de titanyle (TiO(SO₄)), de sulfate de titane(IV), de phosphate de titane(IV) et/ou d'oxychlorure de titane(IV) (TiOCl₂) avec de l'eau, pour obtenir un premier mélange ;
mélange d'eau avec un mélange de liants contenant :
• un ciment contenant un ou plusieurs composants choisis parmi les composés 3CaO*Al₂O₃, 12CaO*7Al₂O₃, CaO*Al₂O₃, CaO*2Al₂O₃, CaO*6Al₂O₃ et/ou 4CaO*3Al₂O₃*SO₃,
• un support de sulfate selon une proportion de 15 à 80 % en poids, de préférence de 25 à 50 % en poids,
• des charges et/ou des charges légères,
• éventuellement au moins un composant alcalin, et
• éventuellement au moins un additif,
pour obtenir un second mélange ; et
mélange du premier mélange avec le second mélange pour obtenir le matériau de construction maniable.

18. Utilisation d'un matériau de construction maniable fabriqué par le procédé défini dans les revendications 15 à 17 dans la construction de tunnels ou dans une imprimante 3D béton.
